Europäisches Patentamt

European Patent Office

Office européen des brevets

(11) Publication number : **0 338 812 B1**

# EUROPEAN PATENT SPECIFICATION

(45) Date of publication of patent specification :
19.07.95 Bulletin 95/29

(51) Int. Cl.⁶ : **H04N 1/21,** H04N 5/92,
H04N 5/91, H04N 5/782

(21) Application number : 89303895.0

(22) Date of filing : 19.04.89

(54) **Magnetic tape recording/reproducing apparatus for digital video signals and associated digital sound signals, and corresponding recording/reproducing method.**

(30) Priority : **19.04.88 JP 97455/88**

(43) Date of publication of application :
25.10.89 Bulletin 89/43

(45) Publication of the grant of the patent :
19.07.95 Bulletin 95/29

(84) Designated Contracting States :
DE GB

(56) References cited :
US-A- 4 602 295
US-A- 4 725 897
PATENT ABSTRACTS OF JAPAN, vol. 12, no.
72 (E-588)[2919], 5th March 1988; & JP-A-62
213 491

(72) Inventor : **Juso, Hiromi**
**Nanda Bldg.2F**
**1023-1 Saijohigashi**
**Saijo-cho**
**Higashihiroshima-shi Hiroshima-ken (JP)**
Inventor : **Nishida, Syuzo**
**3659-4 Shitama**
**Saihjo-cho**
**Higashihiroshima-shi Hiroshima-ken (JP)**
Inventor : **Haikawa, Yukihiko**
**1484-49-5-104, Hachihonmatsu-cho**
**Higashihiroshima-shi Hiroshima-ken (JP)**

(74) Representative : **Brown, Kenneth Richard et al**
**R.G.C. Jenkins & Co.**
**26 Caxton Street**
**London SW1H 0RJ (GB)**

(73) Proprietor : **SHARP KABUSHIKI KAISHA**
**22-22 Nagaike-cho**
**Abeno-ku**
**Osaka 545 (JP)**

## Description

The present invention relates generally to an apparatus and method for recording/reproducing digital signals, and more particularly to a magnetic tape recording/reproducing apparatus and method capable of recording/reproducing a still picture and a sound signal e.g. on/from a so-called digital audio tape as digital signals.

Conventionally, a magnetic tape recording/ reproducing apparatus referred to as DAT (Digital Audio Tape recording/reproducing apparatus) has been known which is used for recording a sound signal on a magnetic tape as a digital signal and reproducing the digital signal. In such a magnetic tape recording/ reproducing apparatus, information for correcting errors referred to as parity can be simultaneously recorded. As a result, even if a part of information recorded is dropped, the original sound can be faithfully reproduced and a sound having very low noise can be obtained.

In the above described magnetic tape recording/reproducing apparatus, the operating manner is selected among a two channel mode, a four channel mode and the like, corresponding to a sound signal to be recorded. In the two channel mode, two types of sound signals to be made acoustic by two speakers arranged in the left front and the right front of a listener are recorded on a magnetic tape. In the four channel mode, four types of sound signals corresponding to four speakers arranged in the left front, the right front, the left rear and the right rear of a listener are recorded thereon.

In the above described conventional magnetic tape recording/reproducing apparatus, a sound signal can be recorded. However, a video signal representing a still picture, together with the sound signal, can not be recorded and reproduced. It has therefore been suggested to provide a magnetic tape recording/reproducing apparatus capable of recording/reproducing a video signal, together with a sound signal, on/from a magnetic tape as digital signals. The present inventors assume one example of a structure of such an apparatus.

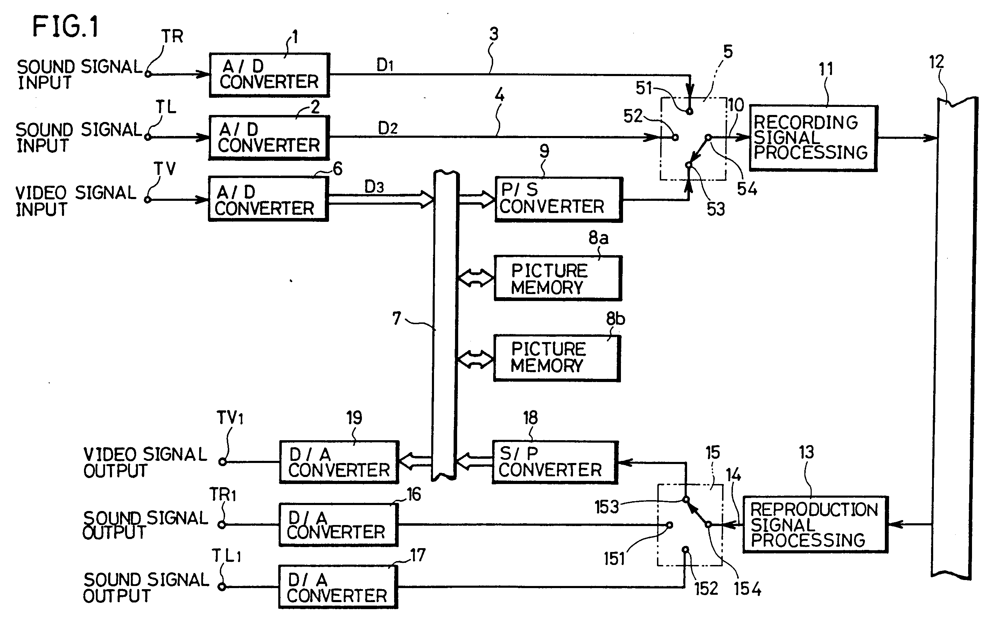

This structure, useful for understanding the present invention, is illustrated in Fig. 1.

In the magnetic tape recording/reproducing apparatus shown in Fig. 1, a four channel mode is used as its operation mode. Sound signals are assigned to two channels out of four channels, and a video signal is assigned to the remaining two channels.

The sound signal corresponding to a speaker arranged in the right front of a listener is inputted from an input terminal TR, while the sound signal corresponding to a speaker arranged in the left front thereof is inputted from an input terminal TL. The video signal is inputted from an input terminal TV. The sound signals inputted from the input terminals TR and TL are respectively converted into, for example, 12-bit digital sound signals D1 and D2 by analogue/digital (referred to as A/D hereinafter) converters 1 and 2, to be serially provided to lines 3 and 4. The A/D converters 1 and 2 convert analogue signals into digital signals at a sampling frequency of 32 kHz. The digital sound signals D1 and D2 provided to the lines 3 and 4 are respectively applied to input terminals 51 and 52 of a switch 5.

The video signal inputted from the input terminal TV is converted into, for example, a 8-bit digital video signal D3 by an A/D converter 6, to be applied to a data bus 7 in parallel. The A/D converter 6 converts analogue signals into digital signals at a sampling frequency of 14.3 MHz. This digital video signal D3 is applied to a picture memory 8a from the data bus 7. The digital video signal D3 corresponding to a video signal of one field is stored in a picture memory 8a in 1/60 second. When writing of the digital video signal D3 corresponding to the video signal of one field to the picture memory 8a is completed, the digital video signal stored is applied to a parallel/serial (referred to as P/S hereinafter) converter 9 through the data bus 7. The digital video signal applied to the P/S converter 9 is serially provided to an input terminal 53 of the switch 5.

The two types of digital sound signals and the digital video signal provided to the input terminals 51, 52 and 53 are selectively applied to an output terminal 54 of the switch 5. The digital signal applied to the output terminal 54 is applied to a recording signal processing portion 11 through a line 10. The recording signal processing portion 11 performs signal processing such as modulation and addition of information for correcting errors such as parity on the digital signal inputted. The digital signal processed in the recording signal processing portion 11 is recorded on a magnetic tape 12.

At the time of reproduction, the digital signal read out from the magnetic tape 12 is inputted to a reproduction signal processing portion 13. The reproduction signal processing portion 13 performs signal processing such as demodulation and error correction processing by parity or the like, to provide two types of digital sound signals and the digital video signal. The digital sound signals and the digital video signal provided from the reproduction signal processing portion 13 are applied to an input terminal 154 of a switch 15 through a line 14. The switch 15 has output terminals 151, 152 and 153. The digital sound signals are respectively provided to the output terminals 151 and 152. The digital video signal is provided to the output terminal 153.

The digital sound signals provided to the output terminals 151 and 152 are respectively converted into analogue sound signals by digital/analogue (referred to as D/A hereinafter) converters 16 and 17 and then, respectively provided to output terminals TR1 and TL1. The digital video signal provided to the output terminal 153 are applied to a serial/parallel (referred to as S/P hereinafter) converter 18. The digital video signal applied to the S/P converter 18 is applied to the data bus 7 in parallel, for example, 8 bits at a time. The digital video signal is applied to either one of the picture memories 8a and 8b connected to the data bus 7. The digital video signals of one field are stored in each of the picture memories 8a and 8b.

From the picture memories 8a and 8b which have each already stored the digital video signals of one field, the digital video signals stored are applied to a D/A converter 19 through the data bus 7. The digital video signals are converted into an analogue video signal by the D/A converter 19, to be provided to an output terminal TV1. More specifically, the digital video signals from the S/ P converter 18 are written in one of the picture memories 8a and 8b. On this occasion, the digital video signals stored in the other picture memory are read out to the D/A converter 19. When a writing operation of the digital video signals of one field to the above described one picture memory is completed, an output of the above described one picture memory is applied to the D/A converter 19. On this occasion, writing of the digital video signals from the S/P converter 18 is initiated. In the above described manner, outputs of the picture memories 8a and 8b are alternately applied to the D/A converter 19. As a result, a still picture which is changed for each constant time period is displayed by a display such as a CRT (cathode-ray-tube).

As described in the foregoing, sampling frequencies in the A/D converters 1 and 2 are, for example, 32 kHz. Sound signals inputted from the input terminals TR and TL respectively correspond to speakers arranged in, for example, the right front and the left front of the listener. Two channels are assigned to the video signal inputted from the input terminal TV. Correspondingly, the output terminal 54 and the input terminals 51, 52 and 53 are sequentially electrically connected in the switch 5.

A switching operation of the switch 5 is performed in response to, for example, a sampling signal having the above described frequency 32 kHz. In a period of one cycle of the sampling signal, the input terminal 51 is selected in a period of the first one-fourth cycle, the input terminal 52 is selected in a period of the subsequent one-fourth cycle, and the input terminal 53 is selected in a period of the subsequent one-half cycle. Each of the input terminals 51, 52 and 53 thus selected and the output terminal 54 are electrically connected to each other. As a result, in a period of one cycle of the sampling signal, (12 x 4)-bit digital signals are inputted to the recording signal processing portion 11.

The digital video signal corresponding to a still picture of one screen must be stored in the picture memory 8a. Therefore, an output of the A/D converter 6 in, for example, a period of one field, i.e., a period of 1/60 second, must be stored. Thus, storage capacity of the picture memory 8a is represented by the following equation:

$$14.3(MHz) \times 8(bits) \times 1/60(sec) = 1.911(Mbits) \quad (1)$$

Furthermore, digital video signals read out to the recording signal processing portion 11 from the picture memory 8a per second are represented by the following equation:

$$32(kHz) \times 12(bits) \times 2 = 768(kbits/sec) \quad (2)$$

Thus, the following time is required to read out digital video signals of one field to the recording signal processing portion 11:

$$1.911(Mbits)/768(kbits/sec) = 2.49(sec) \quad (3)$$

It takes 1/60 second to write the digital video signal of one field in the picture memory 8a. Therefore, the digital video signals representing a still picture of one screen are recorded on the magnetic tape 12 in approximately 2.5 seconds. Thus, a sound signal can be made acoustic and a still picture which is changed every approximately 2.5 seconds can be displayed by reproducing this magnetic tape 12 having the digital video signals and the digital sound signals recorded thereon.

As described in the foregoing, it takes approximately 2.5 seconds to record the still picture of one screen on the magnetic tape 12. This is the same in reproduction of information recorded on the magnetic tape 12. More specifically, at the time of reproduction, the digital video signal of one field is inputted to the reproduction signal processing portion 13 in approximately 2.5 seconds. Thus, it takes approximately 2.5 seconds to store the digital video signal of one field in the picture memory 8a during reproduction.

As described in the foregoing, after storage of the digital video signals of one field in the picture memory 8a is completed, the digital video signals stored are applied to the D/A converter 19. However, in a period during which a digital video signal is being written in the picture memory 8a, the digital sound signals corresponding to the digital video signal being written are respectively provided to the output terminals TR1 and TL1 from the D/A converters 16 and 17. Therefore, a video signal delayed by approximately 2.5 seconds from the sound signals provided to the output terminals TR1 and TL1 is provided to the output terminal TV1. As a result, a reproducing operation is performed with a picture and a sound not corresponding to each other.

To allow the reproduction of a picture and a corresponding sound in synchronism with each other, JP-A-62-213491 discloses a magnetic recording and reproducing device which is provided with a delay circuit. This circuit delays the sound signal prior to recording by a time interval necessary to bring the picture and sound in synchronism with each other during reproduction. This device has the disadvantage that the delay circuit requires an extra memory to hold the sound signal to be delayed in addition to two memories for the picture signal. Such a memory is expensive and increases the power consumption of the device.

Further devices for recording and reproducing still picture video signals and an accompanying sound signal (recorded in time-compressed form) are disclosed in US-4 602 295 and US-4 725 897.

It is an object of the invention to provide a particularly simple method and apparatus for recording and reproducing a still picture video signal and a sound signal on/from a magnetic tape, wherein synchronism between the video signal and the sound signal during reproduction is achieved.

This object is solved by the apparatuses of claims 1, 6 or 8 and the method of claim 7.

Generally, at the time of recording a real-time sound signal and a video unit signal corresponding to a still picture of one screen, are recorded on the magnetic tape. Since a predetermined time period is required to record the video unit signal on the magnetic tape as digital signals, a time lag occurs between recording of the video signal and recording of the sound signal. In addition, at the time of reproduction, the real-time sound signal and the video unit signal corresponding to a still picture of one screen are reproduced from the magnetic tape. Since a predetermined time period is required to reproduce the video unit signal recorded as a digital signal, a time lag occurs between reproduction of the video signal and reproduction of the sound signal.

In a magnetic tape recording/reproducing apparatus according to an embodiment of the present invention, recording of the sound signal is delayed by a time period corresponding to a predetermined time period required to record the video unit signal and a predetermined time period required to reproduce the video unit signal. Thus, at the time of reproduction, the corresponding relation between the video unit signal and the sound signal is maintained.

In a magnetic tape recording/reproducing apparatus according to an embodiment of the present invention, at the time of recording, the video unit signal is sequentially written in at least one of the plurality of storing means in a first time period, and the content of the storing means is read out to be recorded on the tape in a second time period longer than the first time period. At the time of reproduction, the video unit signal reproduced from the tape is sequentially written in any of the plurality of storing means in the second time period. From the storing means in which the video unit signal has been written, the video signal stored is read out in the first time period, to be reproduced.

At the time of recording, the sound signal is sequentially written in the second time period in at least one of the remaining storing means which is not used for writing/reading of the video signal. After this writing operation is completed, the sound signal stored is read out in the second time period, to be recorded.

The first time period is substantially shorter than the second time period. Therefore, when the sound signal is stored in any of the plurality of storing means at the time of recording, the sound signal is recorded on the magnetic tape after a delay of approximately the second time period from the video signal. Consequently, at the time of reproduction, the video unit signal is written in any of the plurality of storing means in the second time period. When the video signal stored is read out from the storing means after completion of this writing operation, a sound signal corresponding to the video signal read is read out from the magnetic tape, to be made acoustic. Thus, the corresponding time relation between picture and sound is maintained during reproduction.

As described in the foregoing, according to the present invention, there is provided a magnetic tape recording/reproducing apparatus having a simple structure capable of recording/reproducing the video unit signal and the sound signal on/from the magnetic tape as digital signals while maintaining the corresponding relation therebetween. Therefore, the magnetic tape recording/reproducing apparatus can be very convenient.

By way only of example, an embodiment of the present invention will be described with reference to the accompanying drawings, in which:

Fig. 1 is a block diagram of the assumed structure of a magnetic tape recording/reproducing apparatus already described which is useful for understanding the present invention;

Fig. 2 is a block diagram showing a basic structure of a magnetic tape recording/reproducing apparatus according to an embodiment of the present invention; and

Fig. 3 is a timing chart for explaining an operation of the magnetic tape recording/reproducing apparatus shown in Fig. 2.

Referring to the drawings, the embodiment of the present invention will be described in detail.

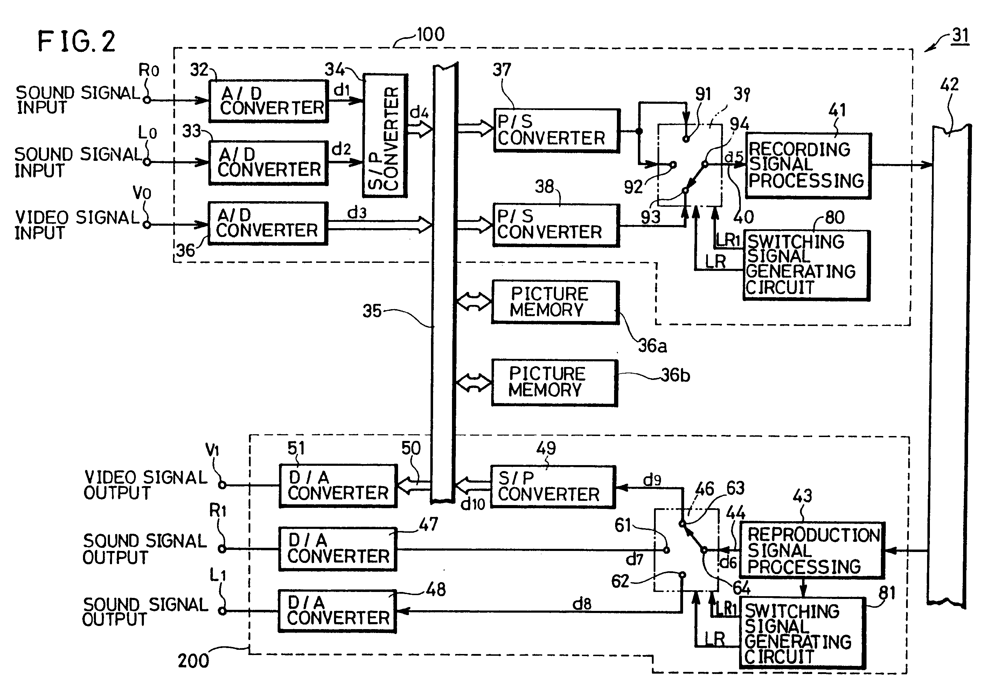

Fig. 2 is a block diagram showing a basic structure of a magnetic tape recording/reproducing apparatus according to an embodiment of the present invention. This magnetic tape recording/reproducing apparatus can perform recording and reproducing operation in a so-called four channel mode, in which sound signals corresponding to four speakers respectively arranged in, for example, the left front, the right front, the left rear and the right rear of a listener are recorded and reproduced. In this embodiment, two channels out of four channels are assigned to sound signals, and the remaining two channels are assigned to a video signal. More specifically, the sound signals recorded and reproduced in this magnetic tape recording/reproducing apparatus are two types of sound signals corresponding to two speakers respectively arranged in the right front and the left front of a listener.

A magnetic tape recording/reproducing apparatus 31 shown in Fig. 2 comprises a recording portion 100, a reproducing portion 200, and picture memories 36a and 36b. The recording portion 100 comprises A/D converters 32, 33 and 36, an S/P converter 34, a P/S converter 37, a switch 39, a switching control signal generating circuit 80, and a recording signal processing portion 41. The reproducing portion 200 comprises D/A converters 47, 48 and 51, an S/P converter 49, a switch 46, a switching control signal generating circuit 81, and a reproduction signal processing portion 43.

Two types of analogue sound signals are inputted to the magnetic tape recording/reproducing apparatus 31 from input terminals R0 and L0. The analogue sound signals are respectively applied to the A/D converters 32 and 33. In the A/D converters 32 and 33, the analogue sound signals inputted are sampled at a sampling frequency of, for example, 32kHz, to be converted into 12-bit digital sound signals d1 and d2. The digital sound signals d1 and d2 from the A/D converters 32 and 33 are serially applied to the S/P converter 34. The digital sound signals applied to the S/P converter 34 are applied to a data bus 35 as a 8-bit parallel digital sound signal d4.

On the other hand, an analogue video signal is applied to the A/D converter 36 through an input terminal V0. In the A/D converter 36, the analogue video signal inputted is sampled at a sampling frequency of, for example, 14.3 MHz, to be converted into a 8-bit digital video signal d3. The digital video signal d3 is applied to the data bus 35 in parallel.

The digital video signal d3 is written in one 36a of the picture memories 36a and 36b which are storing means connected to the data bus 35. A still picture of one screen is represented by a video signal in a period of one field, i.e., a period of 1/60 second. Thus, it takes 1/60 seconds to write the digital video signal d3 corresponding to one screen in the picture memory 36a.

The digital sound signal d4 applied to the data bus 35 from the S/P converter 34 is written in the other memory 36b which is not used for storing the digital video signal d3. The digital sound signal d4 written in the picture memory 36b is not read out until the digital sound signal d4 is written in all storage regions of the picture memory 36b. When storage of the digital sound signal d4 to all the regions of the picture memory 36b is completed, the digital sound signal is read out in the order stored, to be applied to the data bus 35. The digital sound signal read out to the data bus 35 is applied to the P/S converter 37. On the other hand, the digital video signal stored in the picture memory 36a are applied to a P/S converter 38 through the data bus 35.

The digital sound signals serially provided from the P/S converter 37 are applied to input terminals 91 and 92 of the switch 39. The digital video signal serially provided from the P/S converter 38 is applied to an input terminal 93 of the switch 39. In the switch 39, an output terminal 94 and the input terminals 91, 92 and 93 are electrically connected sequentially and cyclically. A digital signal d5 thus provided to a line 40 from the output terminal 94 is applied to the recording signal processing portion 41.

In the recording signal processing portion 41, processing such as modulation and addition of information such as parity for correcting errors is performed with respect to the digital signal d5 inputted. The digital signals thus processed are recorded on a magnetic tape 42 by a rotary head (not shown) or the like.

At the time of reproduction, the digital signals recorded on the magnetic tape 42 are applied to the reproduction signal processing portion 43 from the rotary head. In the reproduction signal processing portion 43, processing such as demodulation and error correcting processing referencing parity or the like is performed. A digital signal d6 thus reproduced is applied to an input terminal 64 of the switch 46 through a line 44.

In the switch 46, output terminals 61 and 62 are respectively connected to the D/A converters 47 and 48, and an output terminal 63 is connected to the S/P converter 49. By a switching operation as described below, in the switch 46, the input terminal 64 and the output terminals 61, 62 and 63 are electrically connected sequentially and cyclically. In the above described manner, digital sound signals d7 and d8 corresponding to speakers arranged in the right front and the left front of a listener are respectively applied to the D/A converters 47 and 48. The digital sound signals d7 and d8 are respectively converted into analogue sound signals in the D/A converters 47 and 48, to be provided to output terminals R1 and L1.

A digital video signal d9 is applied to the S/P converter 49 through the output terminal 63 of the switch 46. The digital video signal d9 inputted to this S/P converter 49 is converted into a parallel digital video signal d10 8 bits at a time, to be applied to the data bus 35. This digital video signal d10 is inputted to either one of the picture memories 36a and 36b. On this occasion, a digital video signal which has already been stored in the other of the picture memories 36a and 36b is applied to the D/A converter 51 from the data bus 35 through a line 50. More specifically, in a period during which the digital video signal d10 is written in either one of the picture memories, the digital video signal stored in the other picture memory is read out in 1/60 second. Consequently, an analogue video signal representing a still picture which corresponds to the digital video signals stored in the other picture memory is continuously provided to an output terminal V1 connected to the D/A converter 51. The above described reading processing is cyclically performed.

Such an analogue video signal is inputted to a display such as a CRT (cathode-ray tube), the still picture being displayed on a display screen thereof.

A switching operation in the switch 39 is controlled by switching control signals LR and LR1 generated from the switching control signal generating circuit 80. A switching operation in the switch 46 is controlled by switching control signals LR and LR1 generated from the switching control signal generating circuit 81.

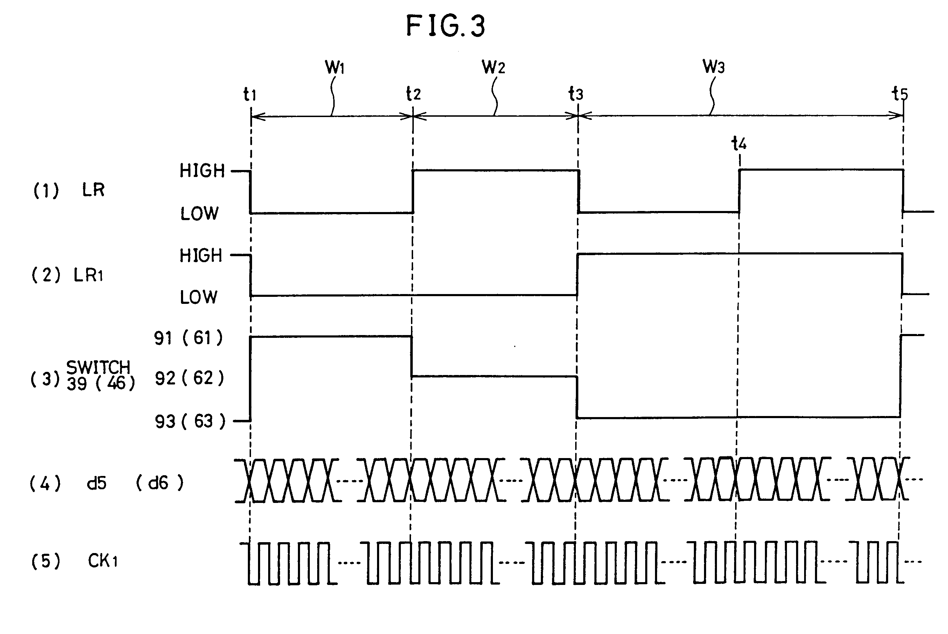

Fig. 3 is a timing chart for explaining an operation of the magnetic tape recording/reproducing apparatus 31.

(1) and (2) in Fig. 3 respectively indicate switching control signals LR and LR1 applied to the switch 39 (or 46), and (3) in Fig. 3 indicates a switching operation of the switch 39 (or 46). (4) in Fig. 3 indicates the digital signal d5 (or d6) provided to the output terminal 94 (or the input terminal 64) of the switch 39 (or 46), and (5) in Fig. 3 indicates a clock signal CK1 generated inside of the recording signal processing portion 41 (or the reproduction signal processing portion 43). Meanwhile, (3) in Fig. 3 indicates the change in the input terminals 91, 92 and 93 (or the output terminals 61, 62 and 63) connected to the output terminal 94 (or the input terminal 64) of the switch 39 (or 46).

When the switching control signals LR and LR1 are both at a low level, the output terminal 94 (or the input terminal 64) of the switch 39 (or 46) is connected to the input terminal 91 (or the output terminal 61). When the switching control signal LR1 is at the low level and the switching control signal LR is at a high level, the output terminal 94 (or the input terminal 64) is connected to the input terminal 92 (or the output terminal 62). When the switching control signal LR1 is at the high level, the output terminal 94 (or the input terminal 64) is connected to the input terminal 93 (or the output terminal 63).

In a period W1 from the time t1 to the time t2, the switching control signals LR and LR1 are both at the low level, so that the output terminal 94 is connected to the input terminal 91. Consequently, digital sound signals are applied to the recording signal processing portion 41 from the P/S converter 37. In this period W1, the digital sound signal applied to the recording signal processing portion 41 corresponds to a speaker arranged in, for example, the right front of a listener. The digital signal d5 provided to the line 40 from the output terminal 94 is accepted inside of the recording signal processing portion 41 bit by bit in synchronization with the rise of the clock signal CK1.

In a period W2 from the time t2 to the time t3, the switching control signal LR is at the high level and the switching control signal LR1 is at the low level. Consequently, in this period W2, the digital sound signals provided to the input terminal 92 from the P/S converter 37 are accepted in the recording signal processing portion 41. The digital sound signals correspond to a speaker arranged in the left front of a listener.

In a period W3 from the time t3 to the time t5, the switching control signal LR1 becomes the high level. Consequently, the output terminal 94 of the switch 39 is connected to the input terminal 93. Consequently, in this period W3, digital video signals from the P/S converter 38 are inputted to the recording signal processing portion 41 bit by bit.

At the time t4, the switching control signal LR rises. Thus, the switching control signal LR becomes the high level in a period from the time t4 to the time t5. However, in a period during which the switching control signal LR1 is at the high level, a switching operation is not performed in the switch 39 in response to the change in the switching control signal LR.

As described in the foregoing, sampling frequencies in the A/D converters 32 and 33 are set to, for example, 32kHz. Correspondingly, the switching control signal LR1 has a frequency of 32 kHz. In addition, since the analogue sound signals inputted to the A/D converters 32 and 33 are converted into 12-bit digital sound signals d1 and d2, the digital sound signals accepted in the recording signal processing portion 41 in the periods W1 and W2 are respectively 12-bit digital signals. Thus, the digital video signals accepted in the recording signal processing portion 41 in the period W3 become 24-bit digital signals.

Each of the picture memories 36a and 36b has a storage capacity P in which a digital video signal corresponding to an analogue video signal of one field can be stored. Since a period of one field is 1/60 second, the sampling frequency in the A/D converter 36 is 14.3 MHz, and the digital video signal d3 sampled and converted is an 8-bit digital signal, the storage capacity P is as follows:

$$P = 14.3(MHz) \times 8(bits) \times 1/60(sec) = 1.911(Mbits) \quad (4)$$

On the other hand, since the switching control signal LR1 has a frequency of 32 kHz and 24-bit digital video signals are inputted to the recording signal processing portion 41 in a period of one cycle of the switching control signal LR1, the amount R of data of the digital video signal read out from the picture memory 36a for one second is as follows:

$$R = 32(kHz) \times 24(bits) = 768(kbits/sec) \quad (5)$$

Thus, time found from the following equation is required to read out all digital video data stored in the picture memory 36a to the recording signal processing portion 41:

$$P/R = 2.49(sec) \quad (6)$$

Thus, the analogue video signal inputted from the input terminal V0 is recorded on the magnetic tape 42 through the recording signal processing portion 41 in a time period found from the following equation:

$$2.49(sec) + 1/60(sec) = 2.5(sec) \quad (7)$$

On the other hand, the analogue sound signals inputted from the input terminals R0 and L0 are stored once in the picture memory 36b. The time represented by the foregoing equation (6), i.e., 2.49 seconds is required to write in the picture memory 36b a digital sound signal having an amount of data corresponding to the storage capacity P of the picture memory 36b. When the digital sound signals are written in all the storage regions of the picture memory 36b, the digital sound signals are read out to the P/S converter 37 in the order written. Thus, the digital sound signals provided to the input terminals 91 and 92 of the switch 39 from the P/S converter 37 are delayed by approximately 2.5 seconds from the sound signals inputted from the input terminals R0 and L0. In the above described manner, any one of the digital video unit signal is recorded on the magnetic tape 42 and then, the digital sound signal associated with said one digital video unit signal is recorded on the magnetic tape 42 interspersed with the following digital video unit signal.

More specifically, the digital sound signal associated with said one digital video unit signal recorded on the magnetic tape 42 is recorded on the magnetic tape 42 after a delay of approximately 2.5 seconds from the start of recording of said one digital video unit signal.

Description is now made of an operation of the magnetic tape recording/reproducing apparatus at the time of reproduction.

Digital signals read out from the magnetic tape 42 by a rotary head or the like are applied to the reproduction signal processing portion 43, to be serially provided bit by bit to the line 44 in synchronization with the falling edge of the clock signal CK1. In the period W1, the digital signal d6 is applied to the D/A converter 47 as the digital sound signal d7. In the period W2, the digital signal d6 is applied to the D/A converter 48 as the digital sound signal d8. In the period W3, the digital signal d6 is applied to the S/P converter 49 as the digital video signal d9. More specifically, the digital signal d6 provided to the line 44 in the periods W1 and W2 respectively corresponds to speakers arranged in the right front and the left front of a listener. The digital signal d6 provided to the line 44 in the period W3 corresponds to the digital video signal.

The digital video signal d10 outputted from the S/P converter 49 is sequentially written in, for example, one 36a of the picture memories. The time of approximately 2.5 seconds is required to write the digital video signal of one field in the picture memory 36a, like the above described time required to read out the digital video signals to the recording signal processing portion 41 from the picture memory 36a. When writing of the digital video signal of one screen is completed, all digital video data stored in the picture memory 36a in which writing thereof is completed are inputted to the D/A converter 51 through the line 50 in 1/60 seconds. Such an operation is repeatedly performed.

In a period during which digital video data of one still picture are read out from the picture memory 36a, a digital video signal of the next still picture is written in the other picture memory 36b. Thus, in a period during which digital video data of one still picture are read out from one of the picture memories 36a and 36b, the digital video signal of the next still picture is written in the other of the picture memories 36a and 36b. Consequently, in a display connected to the output terminal V1, a still picture which is changed for each period of approximately 2.5 seconds or more is displayed.

Analogue sound signals corresponding to the digital sound signals d7 and d8 out of the digital signals d6 provided to the line 44 from the reproduction signal processing portion 43 are respectively outputted from the output terminals R1 and L1 without delay. On the other hand, since the digital video signal d9 is stored once in the picture memories 36a and 36b, the analogue video signal represented by the digital video signal d9 is provided to the output terminal V1 after a delay of approximately 2.5 seconds. However, as described above, digital sound data corresponding to the digital video signal representing a given still picture are recorded on the magnetic tape 42 after a delay of approximately 2.5 seconds from the start of recording of the digital video signal. Consequently, the video signal provided to the output terminal V1 and the sound signals provided to the output terminals R1 and L1 at the time of reproduction are in the same corresponding relation as the corresponding relation between the video signal and the sound signals inputted from the input terminals V0, R0 and L0 at the time of recording. Thus, the content recorded is reproduced while maintaining the corresponding time relation between a picture and a sound.

In the above described manner, in a so-called DAT (Digital Audio Tape Recording/reproducing Apparatus) or the like, a sound signal can be recorded as a digital signal and a video signal representing a still picture can be recorded as a digital signal. As a result, the operation of the DAT or the like is very convenient.

Although in the above described embodiment, description was made of a magnetic tape recording/reproducing apparatus comprising two picture memories capable of storing digital video signals of one screen, it should be noted that a number of picture memories is not limited to two. For example, three or more picture memories may be provided, in which case recording of a sound signal and a video signal representing a still picture according to digital signals is also achieved.

Furthermore, although in the above described embodiment, description was made of a magnetic tape recording/reproducing apparatus in a four channel mode, it should be noted that the present invention can be also applied to a magnetic tape recording/reproducing apparatus in a two channel mode. In this case, it is necessary to assign one channel to recording and reproduction of a video signal. In addition, in the magnetic tape recording/reproducing apparatus in a four channel mode, one channel may be assigned to recording and reproduction of a video signal.

Although an embodiment of the present invention has been described and illustrated in detail, it is clearly understood that the same is by way of illustration and example only and the scope of the present invention is limited only by the terms of the appended claims.

**Claims**

1. A signal recording/reproducing apparatus for recording and reproducing on/from a magnetic tape a video signal and a sound signal as digital signals, the video signal comprising a sequence of unit signals each representing a still picture and having a duration equivalent to a first time period, the sound signal representing audio corresponding to the still pictures of the video signal, a still picture being associated with a portion in time of the sound signal, the apparatus comprising:

recording means (100) for, in respect of each video unit signal and in said sequence, individually writing the video unit signal into a first one (36a) of a plurality of storing means (36a,36b) and then individually reading the video unit signal out therefrom, for recording on the tape in such a manner that the video signal is expansively converted so that each recorded video unit signal has a duration equivalent to a second time period longer than the first, and for writing the associated sound signal into a second one (36b) of said storing means (36a,36b) and then reading the sound signal out therefrom, for recording on the tape with a delay approximately equivalent to said second time period such that the sound recording starts after the recording of the associated video unit signal is accomplished; and

reproducing means (200) for reproducing the recorded video signal by, in respect of each recorded video unit signal and in the recorded sequence, individually writing the video unit signal reproduced from the tape into one of said plurality of storing means (36a,36b) and then individually reading the video unit signal out therefrom, for reproduction in such a manner that the read out video unit signal is compressively converted to have a duration equivalent to said first time period, and for reproducing the associated sound signal from the tape directly without use of the plurality of storing means;

said second one (36b) of the plurality of storing means (36a,36b) serving to store the sound signal during recording and the video signal during reproduction.

2. The signal recording/reproducing apparatus according to claim 1, wherein:

said recording means (100) comprises

first analogue/digital converting means (36) for converting said video unit signal into a digital video unit signal at a first sampling frequency,

second analogue/digital converting means (32,33) for converting said associated sound signal into an associated digital sound signal at a second sampling frequency lower than said first sampling frequency, and

recording processing means (41) for recording said digital video unit signal and said associated digital sound signal on the tape; and

said reproducing means (200) comprises

reproduction processing means (43) for reproducing said recorded digital video unit signal and said recorded associated digital sound signal from the tape,

first digital/analogue converting means (51) for converting the reproduced digital video unit signal into an analogue video signal at said first sampling frequency, and

second digital/analogue converting means (47,48) for converting the reproduced associated digital sound signal into an analogue sound signal at said second sampling frequency;

said first one (36a) of said plurality of storing means (36a,36b) storing once said digital video unit signal from said first analogue/digital converting means (36) to subsequently read out and apply the same to said recording processing means (41) at the time of video recording,

said second one (36b) of said plurality of storing means (36a,36b) storing once said associated digital sound signal from said second analogue/digital converting means (32,33) to subsequently read out and apply the same to said recording processing means (41) at the time of sound recording, and

said first one and said second one of said plurality of storing means (36a,36b) alternately storing successive ones of said digital video unit signals from said reproduction processing means (43) to subsequently read out and apply the successive signals from said first and second storing means to said first digital/analogue converting means (51) at the time of reproduction.

3. The signal recording/reproducing apparatus according to claim 2, further comprising:

first switching means (39) for alternately applying to said recording processing means (41) at a predetermined frequency said digital video unit signal from said first one (36a) of said plurality of storing means (36a,36b) and said associated digital sound signal from said second one (36b) of said plurality of storing means (36a,36b), and

second switching means (46) for alternately applying said digital video unit signal and said associated digital sound signal from said reproduction processing means (43) to one of said plurality of storing means (36a,36b) and to said second digital/analogue converting means (47,48), respectively, at a predetermined frequency.

4. The signal recording/reproducing apparatus according to claim 3, wherein said first analogue/digital converting means (36) outputs said digital video unit signal as parallel data, and said second analogue/digital converting means (32,33) outputs said associated digital sound signal as serial data, and which further comprises:

first serial/parallel converting means (34) for converting the serial associated digital sound signal from said second analogue/digital converting means (32,33) into parallel data to apply the same to said second one of said plurality of storing means (36a,36b),

first parallel/serial converting means (37) for converting the parallel associated digital sound signal applied from said second one of said plurality of storing means (36a,36b) into serial data to apply the same to said first switching means (39),

second parallel/serial converting means (38) for converting the parallel digital video unit signal applied from said first one of said plurality of storing means (36a,36b) into serial data to apply the same to said first switching means (39), and

second serial/parallel converting means (49) for converting the serial digital video unit signal applied from said second switching means (46) to parallel data to apply the same to one of said plurality of storing means (36a,36b).

5. The signal recording/reproducing apparatus according to claim 2, wherein

said second analogue/digital converting means comprises two analogue/digital converters (32,33), and

said second digital/analogue converting means comprises two digital/analogue converters (47,48),

said sound signal comprising two channels.

6. A signal recording/reproducing apparatus for recording and reproducing on/from a magnetic tape a video signal and a sound signal as digital signals, the video signal comprising a sequence of unit signals each representing a still picture and having a duration equivalent to a first time period, the sound signal representing audio associated with the still pictures of the video signal, the apparatus comprising means (100,200) for recording and reproducing said video unit signals such that, in respect of each video unit signal and in said sequence, the video unit signal is individually written into a first one (36a) of a plurality of storing means (36a,36b) and then individually read out therefrom, for recording on the tape in such a manner that the video is expansively converted so that each recorded video unit signal has a duration equivalent to a second time period longer than said first time period, and, in respect of each recorded video unit signal and in the recorded sequence, the video unit signal reproduced from the tape is individually written into one of said plurality of storing means (36a,36b) and then individually read out therefrom, for reproduction in such a manner that each of said video unit signals has a duration equivalent to said first time period, and for recording and reproducing said sound signal such that, in respect of each video unit signal, the associated sound signal is written into a second one (36b) of said plurality of storing means (36a,36b) and read out therefrom for recording on the tape after a delay approximately equivalent to the second time period such that the sound recording starts after the recording of the associated video unit signal is accomplished, and for directly reproducing the recorded associated sound signal without use of the plurality of storing means, at the time of reproduction, said second one (36b) of the plurality of storing means serving to store the sound signal during recording and the video signal during reproduction.

7. A method for recording and reproducing on and from a magnetic tape a video signal and a sound signal as digital signals, the video signal comprising a sequence of unit signals each representing a still picture and having a duration equivalent to a first time period, the sound signal representing audio corresponding to the still pictures of the video signal, a still picture being associated with a portion in time of the sound signal, the method comprising the steps of:

in respect of each video unit signal and in said sequence, writing the video unit signal into a first one (36a) of a plurality of storing means (36a,36b) and then individually reading the video unit signal out therefrom, for recording on the tape in such a manner that the video signal is expansively converted so that each recorded video unit signal has a duration equivalent to a second time period longer than the first;

writing the associated sound signal into a second one (36b) of said storing means (36a,36b) and then reading the sound signal out therefrom, for recording on the tape with a delay approximately equivalent to said second time period such that the sound recording starts after the recording of the associated video unit signal is accomplished;

reproducing the recorded video signal by, in respect of each recorded video unit signal and in the recorded sequence, individually writing the video unit signal reproduced from the tape into one of said plurality of storing means (36a,36b) and then individually reading the video unit signal out therefrom, for reproduction in such a manner that the read out video unit signal is compressively converted to have a duration equivalent to said first time period; and

reproducing the recorded associated sound signal from the tape directly without use of the plurality of storing means;

said second one (36b) of the plurality of storing means (36a,36b) being used to store the sound signal during recording and the video signal during reproduction.

8. A system for recording and reproducing both sound and associated video still pictures in digital form on and from a magnetic tape, said system requiring a sum of first and second predetermined time periods for both the recording and reproducing of video still data corresponding to a still picture, in which system there is provided a plurality of storing means (36a,36b) for storing video and sound signals and means (100,200) for recording and reproducing sound and video data to and from the tape, said video still data being stored in one (36a) of said storing means in said first time period and subsequently read out therefrom in said second time period for recording said video still data on the tape in a time-expanded manner, and the sound data associated with said video still data being stored in another (36b) of said storing means and subsequently read out therefrom for recording on the tape, storage of the sound data serving to delay the recording of the sound data with respect to the start of recording of the associated video still data substantially by the sum of said first and second predetermined time periods, the recorded video still data being reproduced in a time-compressed manner by storage in one of the storing means (36a,36b) and subsequent read-out therefrom, and the associated sound data being reproduced from the tape directly without storage, so as substantially to coordinate the reproduction of the stills and associated sound.

## Patentansprüche

1. Signalaufzeichnungs-/wiedergabevorrichtung zum Aufzeichnen und Wiedergeben eines Videosignals und eines Tonsignals in Form digitaler Signale auf/von einem Magnetband, wobei das Videosignal eine Folge von Signaleinheiten umfaßt, die jeweils ein Stehbild repräsentieren und eine Dauer aufweisen, die einer ersten Zeitperiode entspricht, und wobei das Tonsignal Audioinformation repräsentiert, die den Stehbildern des Videosignals entspricht, wobei ein Stehbild einem zeitlichen Teil des Tonsignals zugeordnet ist, mit:

- einer Aufzeichnungseinrichtung (100), um für jede Videosignaleinheit in der genannten Reihenfolge die Videosignaleinheit individuell in eine erste (36a) unter mehreren Speichereinheiten (36a, 36b) einzuschreiben und dann die Videosignaleinheit individuell aus dieser auszulesen, um eine Aufzeichnung auf dem Band auf solche Weise vorzunehmen, daß das Videosignal expandierend so umgesetzt wird, daß jede Videosignaleinheit eine Dauer aufweist, die einer zweiten Zeitperiode entspricht, die länger als die erste ist, und zum Einschreiben des zugehörigen Tonsignals in eine zweite (36b) der Speichereinrichtungen (36a, 36b) und zum anschließenden Auslesen des Tonsignals aus dieser, um eine Aufzeichnung auf dem Band mit einer-Verzögerung vorzunehmen, die ungefähr der zweiten Zeitspanne entspricht, so daß die Tonaufzeichnung startet, nachdem der Aufzeichnungsvorgang für die zugehörige Videosignaleinheit abgeschlossen ist; und

- einer Wiedergabeeinrichtung (200) zum Wiedergeben des aufgezeichneten Videosignals dadurch, daß für jede aufgezeichnete Videosignaleinheit in der aufgezeichneten Reihenfolge die vom Band abgespielte Videosignaleinheit individuell in eine der mehreren Speichereinrichtungen (36a, 36b) eingeschrieben wird und dann die Videosignaleinheit individuell aus dieser ausgelesen wird, um eine Wiedergabe auf solche Weise zu erzielen, daß die ausgelesene Videosignaleinheit komprimierend so umgesetzt wird, daß sie eine Dauer aufweist, die der ersten Zeitperiode entspricht, und um das zugehörige Tonsignal direkt vom Band abzuspielen, ohne daß die mehreren Speichereinrichtungen verwendet werden;

- wobei die zweite (36b) der mehreren Speichereinrichtungen (36a, 36b) dazu dient, das Tonsignal während der Aufzeichnung und das Videosignal während der Wiedergabe einzuspeichern.

2. Signalaufzeichnungs-/wiedergabevorrichtung nach Anspruch 1, bei der:
   - die Aufzeichnungseinrichtung (100) folgendes aufweist:
     -- eine erste Analog/Digital-Umsetzeinrichtung (36) zum Umsetzen der Videosignaleinheit mit einer ersten Abtastfrequenz in eine digitale Videosignaleinheit;
     -- eine zweite Analog/Digital-Umsetzeinrichtung (32, 33) zum Umsetzen des zugehörigen Tonsignals mit einer zweiten Abtastfrequenz, die niedriger als die erste Abtastfrequenz ist, in ein zugehöriges digitales Tonsignal; und
     -- eine Aufzeichnungsverarbeitungseinrichtung (41) zum Aufzeichnen der digitalen Videosignaleinheit und des zugehörigen digitalen Tonsignals auf dem Band; und
   - die Wiedergabeeinrichtung (200) folgendes aufweist:
     -- eine Wiedergabeverarbeitungseinrichtung (43) zum Wiedergeben der aufgezeichneten digitalen Videosignaleinheit und des aufgezeichneten, zugehörigen, digitalen Tonsignals vom Band;
     -- eine erste Digital/Analog-Umsetzeinrichtung (51) zum Umsetzen der wiedergegebenen digitalen Videosignaleinheit mit der ersten Abtastfrequenz in ein analoges Videosignal; und
     -- eine zweite Digital/Analog-Umsetzeinrichtung (47, 48) zum Umsetzen des wiedergegebenen, zugehörigen, digitalen Tonsignals mit der zweiten Abtastfrequenz in ein analoges Tonsignal;
   - wobei die erste (36a) der mehreren Speichereinrichtungen (36a, 36b) die digitale Videosignaleinheit einmal von der ersten Analog/Digital-Umsetzeinrichtung (36) her einspeichert, um sie bei der Videoaufzeichnung anschließend auszulesen und an die Aufzeichnungsverarbeitungseinrichtung (41) zu geben;
   - wobei die zweite (36b) der mehreren Speichereinrichtungen (36a, 36b) das zugehörige digitale Tonsignal aus der zweiten Analog/Digital-Umsetzung (32, 33) einmal einspeichert, um dasselbe bei der Tonwiedergabe anschließend auszulesen und an die Aufzeichnungsverarbeitungseinrichtung (41) zu geben; und
   - wobei die erste und zweite der mehreren Speichereinrichtungen (36a, 36b) abwechselnd aufeinanderfolgende digitale Videosignaleinheiten von der Wiedergabeverarbeitungseinrichtung (43) einspeichern, um bei der Wiedergabe die aufeinanderfolgenden Signale von der ersten und der zweiten Speichereinrichtung auszulesen und sie an die erste Digital/ Analog-Umsetzeinrichtung (51) zu geben.

3. Signalaufzeichnungs-/wiedergabevorrichtung nach Anspruch 2, ferner mit:
   - einer ersten Umschalteinrichtung (39) zum abwechselnden Anlegen der digitalen Videosignaleinheit von der ersten (36a) der mehreren Speichereinrichtungen (36a, 36b) und des zugehörigen digitalen Tonsignals von der zweiten (36b) der mehreren Speichereinrichtungen (36a, 36b) mit einer vorgegebenen Frequenz an die Aufzeichnungsverarbeitungseinrichtung (41); und
   - einer zweiten Umschalteinrichtung (46) zum abwechselnden Anlegen der digitalen Videosignaleinheit und des zugehörigen digitalen Tonsignals von der Wiedergabeverarbeitungseinrichtung (43) an eine der mehreren Speichereinrichtungen (36a, 36b) bzw. die zweiten Digital/Analog-Umsetzeinrichtungen (47, 48) mit vorgegebener Frequenz.

4. Signalaufzeichnungs-/wiedergabevorrichtung nach Anspruch 3, bei der die erste Analog/Digital-Umsetzeinrichtung (36) die digitale Videosignaleinheit in Form paralleler Daten ausgibt, und die zweite Analog/Digital-Umsetzeinrichtung (32, 33) das zugehörige digitale Tonsignal in Form serieller Daten ausgibt, und die ferner folgendes aufweist:
   - eine erste Seriell/Parallel-Umsetzeinrichtung (34) zum Umsetzen des seriellen, zugehörigen, digitalen Tonsignals von der zweiten Analog/Digital-Umsetzeinrichtung (32, 33) in parallele Daten, um diese an die zweite der mehreren Speichereinrichtungen (36a, 36b) zu legen;
   - eine erste Parallel/Seriell-Umsetzeinrichtung (37) zum Umsetzen des parallelen, zugehörigen, digitalen Tonsignals, wie es von der zweiten der mehreren Speichereinrichtungen (36a, 36b) geliefert wird, in serielle Daten, um diese an die erste Umschalteinrichtung (39) zu legen;
   - eine zweite Parallel/Seriell-Umsetzeinrichtung (38) zum Umsetzen der parallelen, digitalen Videosignaleinheit, wie sie von der ersten der mehreren Speichereinrichtungen (36a, 36b) geliefert wird, in serielle Daten, um diese an die erste Umschalteinrichtung (39) zu legen; und

- eine zweite Seriell/Parallel-Umsetzeinrichtung (49) zum Umsetzen der von der zweiten Umschalteinrichtung (46) gelieferten seriellen, digitalen Videosignaleinheit in parallele Daten, um diese an eine der mehreren Speichereinrichtungen (36a, 36b) zu geben.

5. Signalaufzeichnungs-/wiedergabevorrichtung nach Anspruch 2, bei der

- die zweite Analog/Digital-Umsetzeinrichtung zwei Analog/ Digital-Umsetzer (32, 33) beinhaltet;
- die zweite Digital/Analog-Umsetzeinrichtung zwei Digital/ Analog-Umsetzer (47, 48) beinhaltet; und
- das Tonsignal zwei Kanäle umfaßt.

6. Signalaufzeichnungs-/wiedergabevorrichtung zum Aufzeichnen und Wiedergeben eines Videosignals und eines Tonsignals in Form digitaler Signale auf/von einem Magnetband, wobei das Videosignal eine Folge von Signaleinheiten umfaßt, die jeweils ein Stehbild repräsentieren und eine Dauer aufweisen, die einer ersten Zeitperiode entspricht, und wobei das Tonsignal Audioinformation repräsentiert, die den Stehbildern des Videosignals entspricht, wobei die Vorrichtung eine Einrichtung (100, 200) zum Aufzeichnen und Wiedergeben der Videosignaleinheiten in solcher Weise aufweist, daß die Videosignaleinheit, hinsichtlich jeder Videosignaleinheit, und mit der genannten Reihenfolge, einzeln in eine erste (36a) von mehreren Speichereinrichtungen (36a, 36b) eingeschrieben wird und dann einzeln aus dieser ausgelesen wird, um einen Aufzeichnungsvorgang auf dem Band auf solche Weise vorzunehmen, daß das Videosignal expandierend so umgesetzt wird, daß jede aufgezeichnete Videosignaleinheit eine Dauer aufweist, die einer zweiten Zeitperiode entspricht, die länger als die erste Zeitperiode ist, und daß, hinsichtlich jeder aufgezeichneten Videosignaleinheit, und mit der aufgezeichneten Reihenfolge, die vom Band abgespielte Videosignaleinheit einzeln in eine der mehreren Speichereinrichtungen (36a, 36b) eingeschrieben und dann einzeln aus dieser ausgelesen wird, um eine Wiedergabe auf solche Weise zu erzielen, daß jede der Videosignaleinheiten eine Dauer aufweist, die der ersten Zeitspanne entspricht, und um das Tonsignal in bezug auf jede Videosignaleinheit in solcher Weise aufzuzeichnen und wiederzugeben, daß das zugehörige Tonsignal in eine zweite (36b) der mehreren Speichereinrichtungen (36a, 36b) eingeschrieben wird und aus dieser zur Aufzeichnung auf dem Band nach einer Verzögerung ausgelesen wird, die ungefähr der zweiten Zeitperiode entspricht, so daß die Tonaufzeichnung beginnt, nachdem die Aufzeichnung der zugehörigen Videosignaleinheit beendet ist, und um das aufgezeichnete, zugehörige Tonsignal ohne Verwendung der mehreren Speichereinrichtungen bei der Wiedergabe direkt abzuspielen, wobei die zweite (36b) der mehreren Speichereinrichtungen dazu dient, das Tonsignal während der Aufzeichnung und das Videosignal während der Wiedergabe einzuspeichern.

7. Verfahren zum Aufzeichnen und Wiedergeben eines Videosignals und eines Tonsignals auf bzw. von einem Magnetband in Form digitaler Signale, wobei das Videosignal eine Folge von Signaleinheiten umfaßt, die jeweils ein Stehbild repräsentieren und eine Dauer aufweisen, die einer ersten Zeitperiode entspricht, und wobei das Tonsignal Audioinformation repräsentiert, die den Stehbildern des Videosignals entspricht, wobei ein Stehbild einem zeitlichen Teil des Tonsignals zugeordnet ist, wobei das Verfahren folgende Schritte umfaßt:

- Einschreiben, hinsichtlich jeder Videosignaleinheit, und in der genannten Reihenfolge, der Videosignaleinheit in eine erste (36a) von mehreren Speichereinrichtungen (36a, 36b) mit anschließendem einzelnem Auslesen der Videosignaleinheit aus dieser, um einen Aufzeichnungsvorgang auf dem Band auf solche Weise auszuführen, daß das Videosignal expandierend so umgesetzt wird, daß jede aufgezeichnete Videosignaleinheit eine Dauer aufweist, die einer zweiten Zeitperiode entspricht, die länger als die erste ist;
- Einschreiben des zugehörigen Tonsignals in eine zweite (36b) der Speichereinrichtungen (36a, 36b) und anschließendes Auslesen des Tonsignals aus dieser, um einen Aufzeichnungsvorgang auf dem Band mit einer Verzögerung vorzunehmen, die ungefähr der zweiten Zeitperiode entspricht, so daß die Tonaufzeichnung beginnt, nachdem die Aufzeichnung der zugehörigen Videosignaleinheit beendet ist;
- Wiedergeben des aufgezeichneten Videosignals, hinsichtlich jeder aufgezeichneten Videosignaleinheit, und in der aufgezeichneten Reihenfolge, dadurch, daß die vom Band abgespielte Videosignaleinheit einzeln in eine der mehreren Speichereinrichtungen (36a, 36b) eingeschrieben wird und dann die Videosignaleinheit einzeln aus dieser ausgelesen wird, um eine Wiedergabe auf solche Weise zu erzielen, daß die ausgegebene Videosignaleinheit komprimierend so umgesetzt wird, daß sie eine Dauer aufweist, die der ersten Zeitperiode entspricht; und

- Wiedergeben des aufgezeichneten, zugehörigen Tonsignals vom Band in direkter Weise ohne Verwendung der mehreren Speichereinrichtungen;
- wobei die zweite (36b) der mehreren Speichereinrichtungen (36a, 36b) dazu verwendet wird, das Tonsignal während der Aufzeichnung und das Videosignal während der Wiedergabe einzuspeichern.

8. System zum Aufzeichnen und Wiedergeben sowohl von Ton als auch zugeordneten Videostehbildern in digitaler Form auf bzw. von einem Magnetband, welches System die Summe aus einer ersten und einer zweiten vorgegebenen Zeitperiode sowohl beim Aufzeichnen als auch Wiedergeben von den einem Stehbild entsprechenden Videostehbildern benötigt, wobei das System mit mehreren Speichereinrichtungen (36a, 36b) zum Einspeichern von Video- und Tonsignalen und Einrichtungen (100, 200) zum Aufzeichnen und Wiedergeben von Ton- und Videodaten auf das bzw. vom Band versehen ist, wobei die Videostehbilddaten in der ersten Zeitperiode in eine (36a) der Speichereinrichtungen eingespeichert werden und anschließend aus dieser in der zweiten Zeitperiode ausgelesen werden, um die Videostehbilddaten auf zeitexpandierte Weise auf dem Band aufzuzeichnen, und die den Videostehbilddaten zugeordneten Tondaten in einer anderen (36b) der Speichereinrichtungen eingespeichert werden und anschließend aus dieser zur Aufzeichnung auf dem Band ausgelesen werden, wobei das Einspeichern der Tondaten dazu dient, die Aufzeichnung derselben hinsichtlich des Aufzeichnungsstarts der zugehörigen Videostehbilddaten im wesentlichen um die Summe aus der ersten und der zweiten vorgegebenen Zeitspanne zu verzögern, wobei die aufgezeichneten Videostehbilddaten auf zeitkomprimierte Weise dadurch wiedergegeben werden, daß Einspeichern in einer der Speichereinrichtungen (36a, 36b) mit anschließendem Auslesen aus diesen erfolgt, und die zugehörigen Tondaten direkt, ohne Speicherung, vom Band wiedergegeben werden, um im wesentlichen die Wiedergabe der Stehbilder und des zugehörigen Tons zu koordinieren.

**Revendications**

1. Appareil d'enregistrement/reproduction de signaux, pour enregistrer et reproduire, sur/à partir d'une bande magnétique, un signal vidéo et un signal audio sous forme de signaux numériques, le signal vidéo comprenant une suite de signaux élémentaires, dont chacun représente une image immobile et possède une durée équivalente à une première période de temps, le signal audio représentant un son qui correspond aux images immobiles du signal vidéo, une image immobile étant associée à une partie temporelle du signal audio, l'appareil comprenant:

des moyens d'enregistrement (100) destinés, à l'égard de chaque signal élémentaire vidéo et dans ladite suite, à inscrire individuellement le signal élémentaire vidéo dans un premier moyen de mémorisation (36a) d'un ensemble de moyens de mémorisation (36a, 36b) et à extraire ensuite individuellement, par lecture, le signal élémentaire vidéo de ce moyen de mémorisation, pour l'enregistrer sur la bande d'une manière telle que le signal vidéo soit converti dans le sens d'une dilatation afin que chaque signal élémentaire vidéo enregistré ait une durée équivalente à une deuxième période de temps plus longue que la première, et destinés à inscrire le signal audio associé dans un deuxième moyen de mémorisation (36b) desdits moyens de mémorisation (36a, 36b) et à extraire ensuite par lecture le signal audio de ce moyen de mémorisation, pour l'enregistrer sur la bande avec un retard équivalent approximativement à ladite deuxième période de temps, de telle façon que l'enregistrement audio démarre après que l'enregistrement du signal élémentaire vidéo associé a été réalisé; et

des moyens de reproduction (200) destinés à reproduire le signal vidéo enregistré en procédant, à l'égard de chaque signal élémentaire vidéo enregistré et dans la suite enregistrée, à une inscription individuelle du signal élémentaire vidéo reproduit à partir de la bande, dans l'un des moyens de mémorisation dudit ensemble de moyens de mémorisation (36a, 36b), et ensuite à une extraction individuelle par lecture du signal élémentaire vidéo de ce moyen de mémorisation, pour le reproduire d'une manière telle que le signal élémentaire vidéo extrait par lecture soit converti dans le sens d'une compression afin de présenter une durée équivalente à ladite première période de temps, et destinés à reproduire directement le signal audio associé à partir de la bande, sans l'utilisation de l'ensemble de moyens de mémorisation;

ledit deuxième moyen de mémorisation (36b) de l'ensemble de moyens de mémorisation (36a, 36b) servant à mémoriser le signal audio au cours de l'enregistrement et le signal vidéo au cours de la reproduction.

2. Appareil d' enregistrement/reproduction de signaux selon la revendication 1, dans lequel:

lesdits moyens d'enregistrement (100) comprennent

un premier moyen de conversion analogique/ numérique (36) pour convertir ledit signal élémentaire vidéo en un signal élémentaire vidéo numérique, à une première fréquence d' échantillonnage,

un deuxième moyen de conversion analogique/numérique (32, 33) pour convertir ledit signal audio associé en un signal audio numérique associé, à une deuxième fréquence d'échantillonnage plus basse que ladite première fréquence d'échantillonnage, et

un moyen d'exécution de l'enregistrement (41) pour enregistrer ledit signal élémentaire vidéo numérique et ledit signal audio numérique associé, sur la bande; et

lesdits moyens de reproduction (200) comprennent

un moyen d'exécution de la reproduction (43) pour reproduire ledit signal élémentaire vidéo numérique enregistré et ledit signal audio numérique associé enregistré, à partir de la bande,

un premier moyen de conversion numérique/ analogique (51) pour convertir le signal élémentaire vidéo numérique reproduit en un signal vidéo analogique, à ladite première fréquence d'échantillonnage, et

un deuxième moyen de conversion numérique/ analogique (47, 48) pour convertir le signal audio numérique associé reproduit en un signal audio analogique, à ladite deuxième fréquence d'échantillonnage;

ledit premier moyen de mémorisation (36a) dudit ensemble de moyens de mémorisation (36a, 36b), mémorisant une fois ledit signal élémentaire vidéo numérique, issu dudit premier moyen de conversion analogique/numérique (36), pour l'extraire ensuite par lecture et le transmettre audit moyen d'exécution de l'enregistrement (41), au moment de l'enregistrement vidéo,

ledit deuxième moyen de mémorisation (36b) dudit ensemble de moyens de mémorisation (36a, 36b), mémorisant une fois ledit signal audio numérique associé, issu dudit deuxième moyen de conversion analogique/numérique (32, 33), pour l'extraire ensuite par lecture et le transmettre audit moyen d'exécution de l'enregistrement (41), au moment de l'enregistrement audio, et

ledit premier moyen de mémorisation et ledit deuxième moyen de mémorisation dudit ensemble de moyens de mémorisation (36a, 36b) mémorisant en alternance des signaux élémentaires vidéo numériques successifs issus dudit moyen d'exécution de la reproduction (43), pour ensuite extraire par lecture et transmettre les signaux successifs, desdits premier et deuxième moyens de mémorisation audit premier moyen de conversion numérique/analogique (51), au moment de la reproduction.

3. Appareil d'enregistrement/reproduction de signaux selon la revendication 2, comprenant en outre:

un premier moyen de commutation (39) pour transmettre en alternance, audit moyen d'exécution de l'enregistrement (41) et à une fréquence prédéterminée, ledit signal élémentaire vidéo numérique, à partir dudit premier moyen de mémorisation (36a) dudit ensemble de moyens de mémorisation (36a, 36b), et ledit signal audio numérique associé, à partir dudit deuxième moyen de mémorisation (36b) dudit ensemble de moyens de mémorisation (36a, 36b), et

un deuxième moyen de commutation (46) pour transmettre en alternance ledit signal élémentaire vidéo numérique et ledit signal audio numérique associé, dudit moyen d'exécution de la reproduction (43) à l'un des moyens de mémorisation dudit ensemble de moyens de mémorisation (36a, 36b) et, respectivement, audit deuxième moyen de conversion numérique/analogique (47, 48), à une fréquence prédéterminée.

4. Appareil d'enregistrement/reproduction de signaux selon la revendication 3, dans lequel ledit premier moyen de conversion analogique/numérique (36) délivre ledit signal élémentaire vidéo numérique sous forme de données parallèles, et ledit deuxième moyen de conversion analogique/numérique (32, 33) délivre ledit signal audio numérique associé sous forme de données série, et qui comprend en outre:

un premier moyen de conversion série/parallèle (34) pour convertir le signal audio numérique associé série, issu dudit deuxième moyen de conversion analogique/numérique (32, 33), en des données parallèles, afin de le transmettre audit deuxième moyen de mémorisation dudit ensemble de moyens de mémorisation (36a, 36b),

un premier moyen de conversion parallèle/série (37) pour convertir le signal audio numérique associé parallèle, transmis depuis ledit deuxième moyen de mémorisation dudit ensemble de moyens de mémorisation (36a, 36b), en des données série, afin de le transmettre audit premier moyen de commutation (39),

un deuxième moyen de conversion parallèle/série (38) pour convertir le signal élémentaire vidéo numérique parallèle, transmis depuis ledit premier moyen de mémorisation dudit ensemble de moyens de mémorisation (36a, 36b), en des données série, afin de le transmettre audit premier moyen de commutation (39), et

un deuxième moyen de conversion série/parallèle (49) pour convertir le signal élémentaire vidéo numérique série, transmis depuis ledit deuxième moyen de commutation (46), en des données parallèles, afin de le transmettre à l'un desdits moyens de mémorisation dudit ensemble de moyens de mémorisation (36a, 36b).

5. Appareil d'enregistrement/reproduction de signaux selon la revendication 2, dans lequel

ledit deuxième moyen de conversion analogique/numérique comprend deux convertisseurs analogique/numérique (32, 33), et

ledit deuxième moyen de conversion numérique/analogique comprend deux convertisseurs numérique/analogique (47, 48),

ledit signal audio comprenant deux voies.

6. Appareil d'enregistrement/reproduction de signaux pour enregistrer et reproduire, sur/à partir d'une bande magnétique, un signal vidéo et un signal audio sous forme de signaux numériques, le signal vidéo comprenant une suite de signaux élémentaires, dont chacun représente une image immobile et possède une durée équivalente à une première période de temps, le signal audio représentant un son associé aux images immobiles du signal vidéo, l'appareil comprenant des moyens (100, 200) destinés à enregistrer et reproduire lesdits signaux élémentaires vidéo de telle façon que, à l'égard de chaque signal élémentaire vidéo et dans ladite suite, le signal élémentaire vidéo soit inscrit individuellement dans un premier moyen de mémorisation (36a) d'un ensemble de moyens de mémorisation (36a, 36b), puis en soit extrait individuellement par lecture, pour être enregistré sur la bande d'une manière telle que le signal vidéo soit converti dans le sens d'une dilatation afin que chaque signal élémentaire vidéo enregistré ait une durée équivalente à une deuxième période de temps plus longue que ladite première période de temps, et qu'à l'égard de chaque signal élémentaire vidéo enregistré et dans la suite enregistrée, le signal élémentaire vidéo reproduit à partir de la bande soit inscrit individuellement dans l'un desdits moyens de mémorisation dudit ensemble de moyens de mémorisation (36a, 36b), puis en soit extrait individuellement par lecture, pour être reproduit d'une manière telle que chacun desdits signaux élémentaires vidéo ait une durée équivalente à ladite première période de temps, et destinés à enregistrer et reproduire ledit signal audio, d'une façon telle qu'à l'égard de chaque signal élémentaire vidéo, le signal audio associé soit inscrit dans un deuxième moyen de mémorisation (36b) dudit ensemble de moyens de mémorisation (36a, 36b) et en soit extrait par lecture pour être enregistré sur la bande après un retard approximativement équivalent à la deuxième période de temps, afin que l'enregistrement audio démarre après que l'enregistrement du signal élémentaire vidéo associé a été réalisé, et pour que le signal audio associé enregistré soit directement reproduit sans l'utilisation de l'ensemble de moyens de mémorisation, au moment de la reproduction, ledit deuxième moyen de mémorisation (36b) de l'ensemble de moyens de mémorisation servant à mémoriser le signal audio au cours de l'enregistrement et le signal vidéo au cours de la reproduction.

7. Procédé pour enregistrer et reproduire, sur et à partir d'une bande magnétique, un signal vidéo et un signal audio sous forme de signaux numériques, le signal vidéo comprenant une suite de signaux élémentaires, dont chacun représente une image immobile et possède une durée équivalente à une première période de temps, le signal audio représentant un son correspondant aux images immobiles du signal vidéo, une image immobile étant associée à une partie temporelle du signal audio, le procédé comprenant les étapes consistant:

à l'égard de chaque signal élémentaire vidéo et dans ladite suite, à inscrire le signal élémentaire vidéo dans un premier moyen de mémorisation (36a) d'un ensemble de moyens de mémorisation (36a, 36b), puis à extraire individuellement par lecture le signal élémentaire vidéo de ce moyen de mémorisation, pour l'enregistrer sur la bande d'une manière telle que le signal vidéo soit converti dans le sens d'une dilatation, afin que chaque signal élémentaire vidéo enregistré ait une durée équivalente à une deuxième période de temps plus longue que la première;

à inscrire le signal audio associé dans un deuxième moyen de mémorisation (36b) desdits moyens de mémorisation (36a, 36b), puis à extraire par lecture le signal audio de ce moyen de mémorisation, pour l'enregistrer sur la bande avec un retard équivalent approximativement à ladite deuxième période de temps, afin que l'enregistrement audio démarre après que l'enregistrement du signal élémentaire vidéo associé a été réalisé;

à reproduire le signal vidéo enregistré en procédant, à l'égard de chaque signal élémentaire vidéo enregistré et dans la suite enregistrée, à une inscription individuelle du signal élémentaire vidéo, reproduit à partir de la bande, dans l'un desdits moyens de mémorisation dudit ensemble de moyens de mémorisation (36a, 36b), puis à l'extraction individuelle par lecture du signal élémentaire vidéo de ce moyen de mémorisation, pour le reproduire d'une manière telle que le signal élémentaire vidéo extrait par lecture soit converti dans le sens d'une compression pour avoir une durée équivalente à ladite première période de temps; et

à reproduire directement le signal audio associé enregistré, à partir de la bande, sans l'utilisation de l'ensemble de moyens de mémorisation;

ledit deuxième moyen de mémorisation (36b) de l'ensemble de moyens de mémorisation (36a, 36b) étant utilisé pour mémoriser le signal audio au cours de l'enregistrement et le signal vidéo au cours de la reproduction.

8. Système pour enregistrer et reproduire, sur et à partir d'une bande magnétique, à la fois un son et des images immobiles vidéo associées, sous forme numérique, ledit système requérant une somme de première et deuxième périodes de temps prédéterminées pour, à la fois, l'enregistrement et la reproduction de données vidéo d'image immobile correspondant à une image immobile, système dans lequel il est prévu un ensemble de moyens de mémorisation (36a, 36b) pour mémoriser des signaux vidéo et audio et des moyens (100, 200) pour enregistrer et reproduire des données audio et vidéo, sur et à partir de la bande, lesdites données vidéo d'image immobile étant mémorisées dans l'un (36a) desdits moyens de mémorisation, dans ladite première période de temps, et en étant ensuite extraites par lecture, dans ladite deuxième période de temps, pour l'enregistrement desdites données vidéo d'image immobile sur la bande, selon un mode de dilatation dans le temps, et les données audio associées auxdites données vidéo d'image immobile étant mémorisées dans un autre (36b) desdits moyens de mémorisation et extraites ensuite par lecture de ce dernier pour être enregistrées sur la bande, la mémorisation des données audio servant à retarder l'enregistrement des données audio par rapport au début de l'enregistrement des données vidéo d'image immobile associées, sensiblement de la somme desdites première et deuxième périodes de temps prédéterminées, les données vidéo d'image immobile enregistrées étant reproduites, selon un mode de compression dans le temps, par mémorisation dans l'un des moyens de mémorisation (36a, 36b) et extraction subséquente par lecture de ce dernier, et les données audio associées étant directement reproduites, à partir de la bande, sans mémorisation, afin de coordonner sensiblement la reproduction des images immobiles et du son associé.

FIG.1

EP 0 338 812 B1

# FIG. 2

SOUND SIGNAL INPUT $R_0$ → 32 A/D CONVERTER → $d_1$

SOUND SIGNAL INPUT $L_0$ → 33 A/D CONVERTER → $d_2$

34 S/P CONVERTER → $d_4$

VIDEO SIGNAL INPUT $V_0$ → A/D CONVERTER → $d_3$

36

100    31

37 P/S CONVERTER

91    39    94

92    93    $d_5$

40

41 RECORDING SIGNAL PROCESSING

38 P/S CONVERTER

80 SWITCHING SIGNAL GENERATING CIRCUIT    $LR_1$    $LR$

35

PICTURE MEMORY    36a

PICTURE MEMORY    36b

42

VIDEO SIGNAL OUTPUT $V_1$ → 51 D/A CONVERTER

50    49 S/P CONVERTER    $d_9$

$d_{10}$

46    63    44    43 REPRODUCTION SIGNAL PROCESSING

61    $d_7$    $d_6$

SOUND SIGNAL OUTPUT $R_1$ → 47 D/A CONVERTER

SOUND SIGNAL OUTPUT $L_1$ → 48 D/A CONVERTER    $d_8$

62    64    81 SWITCHING SIGNAL GENERATING CIRCUIT    $LR_1$    $LR$

200

18

EP 0 338 812 B1

FIG.3

(1)  LR

(2) LR1

(3) SWITCH
39 ( 46 )

(4)  d5    ( d6 )

(5)  CK1

HIGH
LOW
HIGH
LOW
91 ( 61 )
92 ( 62 )
93 ( 63 )

$t_1$  $t_2$  $t_3$  $t_4$  $t_5$

$W_1$  $W_2$  $W_3$